# EUROPEAN PATENT APPLICATION

(11) **EP 1 554 961 A1**
(43) Date of publication of application: **20.07.2005**
(21) Application number: 05250163.2
(22) Date of filing: 14.01.2005
(51) Int. Cl.: A47J 37/06

(54) **Cooking assembly for waffle with syrup holder**

(30) Priority: 15.01.2004 US 536869 P
(71) Applicant: Tilia International, Inc., San Francisco, California 94107 (US)
(72) Inventor: Albritton, Charles Wade, Hercules, California 94547 (US); Small, Steven, Novato, California 94947 (US); Patterson, Jesse Frost, Pacifica, California 94044 (US)
(74) Representative: Merrifield, Sarah Elizabeth

(57) **Abstract**

A method and appliance (100) for making a waffle (110) with a syrup holder or logo with a ring of three-dimensional flower-shaped flowers is described. The three-dimensional flower-shaped waffles (110) have contoured surfaces that define, among other features, the petals of the flower.
The underside of the waffle (110) includes pyramidal wells that are shaped to allow for even cooking of the waffle (110).

## Description

### FIELD OF THE INVENTION

The present invention generally relates to food preparation technology. More particularly, the invention is directed to making waffles with syrup holders or logos and other engravings.

### DESCRIPTION OF THE DRAWINGS

The present invention is illustrated by way of example, and not by way of limitation.
FIG. 1 illustrates an isometric view of a cooking assembly 100 for making waffles with syrup holders or logos, according to certain embodiments of the invention;
FIG. 2 is similar to FIG. 1 except that FIG. 2 is a line drawing of the cooking assembly 200;
FIG. 3 is a bottom isometric view of a cooked waffle;
FIG. 4 is similar to FIG. 3 except that FIG. 4 is a line drawing (bottom isometric view) of the cooked waffle;
FIG. 5A is a top isometric view of a cooked waffle that can accommodate a syrup holder;
FIG. 5B is similar to FIG. 5A except that FIG. 5B shows a syrup holder resting on the cooked waffle;
FIG. 6A is a top isometric view of a cooked waffle with a logo; and
FIG. 6B is a bottom isometric view of a cooked waffle of FIG. 6A.

### DETAILED DESCRIPTION OF THE PREFERRED EMBODIMENT

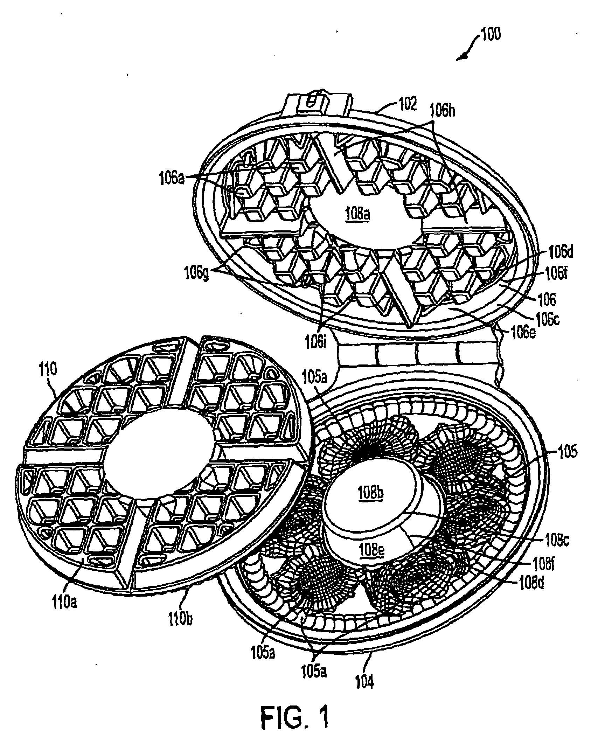

FIG. 1 illustrates an isometric view of a cooking assembly 100 for making waffles that can accommodate syrup holders or logos, according to certain embodiments of the invention. FIG. 1 shows cooking assembly 100 in an open position. Cooking assembly 100 includes an upper plate 102 and a lower plate 104. Upper plate 102 is receivable on lower plate 104 or vice versa when cooking assembly 100 is in a closed position.

Upper plate 102 includes a cavity 106. Cavity 106 includes, within it, a plurality of protuberances, such as protuberances 106a, 106g and 106h. Protuberances such as protuberances 106a are approximately pyramidal in shape with a flat surface at the top. Protuberances such as protuberances 106g are partial pyramidal shapes that are truncated in order to fit within the perimeter of cavity 106. Further, the protuberances in the cavity 106 are surrounded by grooves such as grooves 106i. Protuberances 106h are beam-shaped and are tapered towards the top to form a narrow ridge at the top. The protuberances 106a, 106g and 106h are arranged such that a circular space 108a remains in the middle of cavity 106.

Further, cavity 106 includes a top ledge 106c along the perimeter of cavity 106. Cavity 106 includes a sloped inner wall 106e. Sloped inner wall 106e is sloped at an angle such that an imaginary line 106f running from top ledge 106c to a bottom edge 106d makes a small angle with an imaginary plane that is perpendicular to the horizontal plane of upper plate 102. The small angle is such that when a waffle is cooked in cavity 106, the cooked waffle can be easily detached from cavity 106 in order to preserve the general structural integrity of the cooked waffle.

Cooking assembly 100 further includes a lower plate 104. Lower plate 104 includes a cavity 105. Cavity 105, includes, within it: 1) contoured surfaces 105a, 2) a central cup-like mold 108b.

Contoured surfaces 105a form a ring around central cup-like mold 108b. Contoured surfaces 105a are for molding a ring of three-dimensional flower shapes in the waffle that is to be cooked in cooking assembly 100.

Central cup-like mold 108b is receivable on circular space 108a of upper plate 102 when cooking assembly 100 is in a closed position. Central cup-like mold 108b has a sloped wall 108e. Sloped wall 108e is sloped at an angle such that an imaginary line 106f running from a top edge 108c to a bottom edge 108d makes a small angle with an imaginary plane that is perpendicular to the horizontal plane of lower plate 104. The small angle is such that when a waffle is cooked in cavity 105, the cooked waffle can be easily detached from cavity 105 in order to preserve the general structural integrity of the cooked waffle.

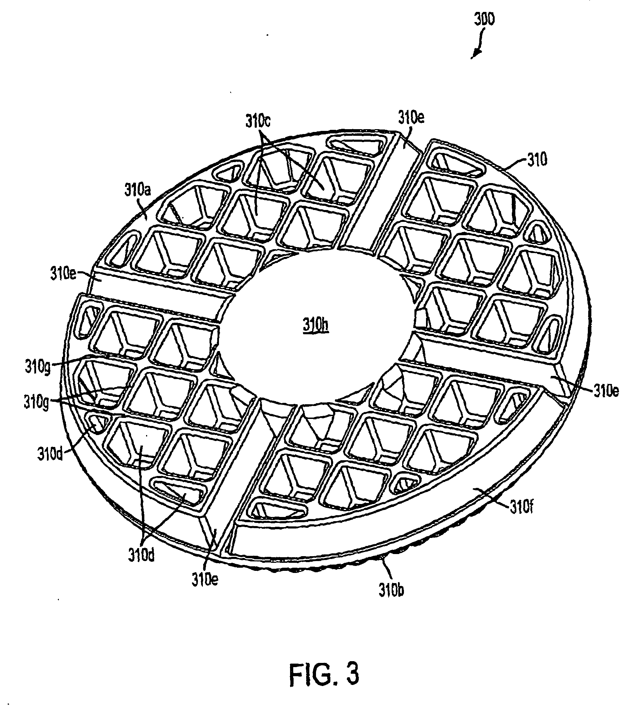

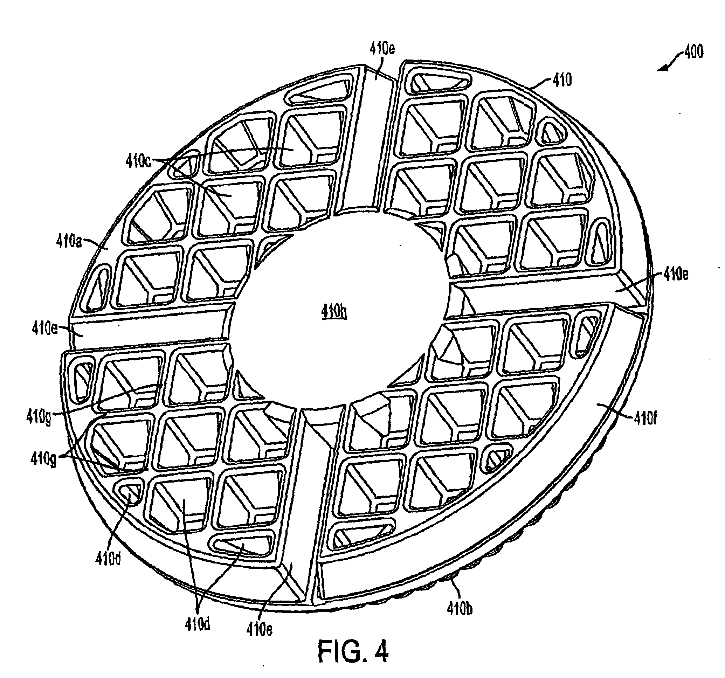

FIG. 1 also shows a bottom isometric view of a cooked waffle 110 with a bottom surface 110a and a top surface 110b. The cooked waffle is described in greater detail herein with reference to FIG. 3 and FIG. 4.

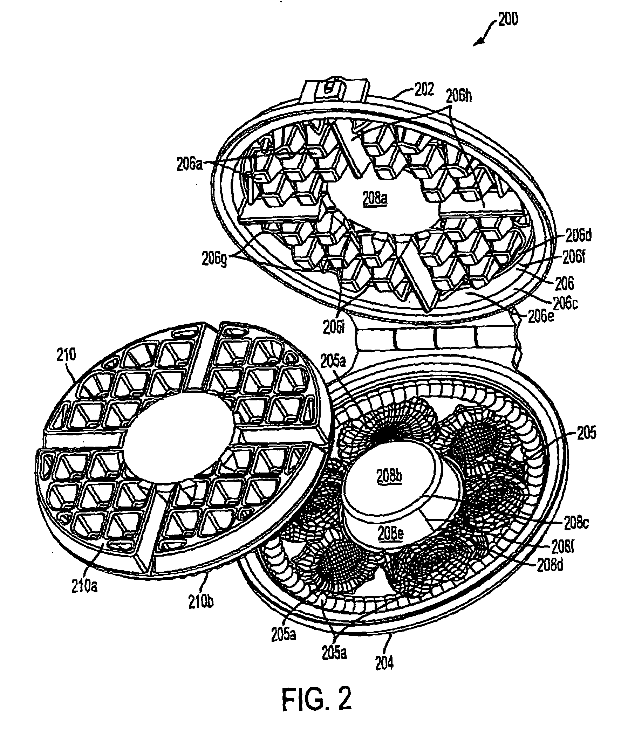

FIG. 2 is similar to FIG. 1 except that FIG. 2 is a line drawing of the cooking assembly 200. FIG. 2 shows cooking assembly 200 in an open position. Cooking assembly 200 includes an upper plate 202 and a lower plate 204. Upper plate 202 is receivable on lower plate 204 or vice versa when cooking assembly 200 is in a closed position.

Upper plate 202 includes a cavity 206. Cavity 206 includes, within it, a plurality of protuberances, such as protuberances 206a, 206g and 206h. Protuberances such as protuberances 206a are approximately pyramidal in shape with a flat surface at the top. Protuberances such as protuberances 206g are partial pyramidal shapes that are truncated in order to fit within the perimeter of cavity 206. Further, the protuberances in the cavity 206 are surrounded by grooves such as grooves 206i. Protuberances 206h are beam-shaped and are tapered towards the top to form a narrow ridge at the top. The protuberances 206a, 206g and 206h are arranged such that a circular space 208a remains in the middle of cavity 206.

Further, cavity 206 includes a top ledge 206c along the perimeter of cavity 206. Cavity 206 includes a sloped inner wall 206e. Sloped inner wall 206e is sloped at an angle such that an imaginary line 206f running from top ledge 206c to a bottom edge 206d makes a small angle with an imaginary plane that is perpendicular to the horizontal plane of upper plate 202. The small angle is such that when a waffle is cooked in cavity 206, the cooked waffle can be easily detached from cavity 206 in order to preserve the general structural integrity of the cooked waffle.

Cooking assembly 200 further includes a lower plate 204. Lower plate 204 includes a cavity 205. Cavity 205, includes, within it: 1) contoured surfaces 205a, 2) a central cup-like mold 208b.

Contoured surfaces 205a form a ring around central cup-like mold 208b. Contoured surfaces 205a are for molding a ring of three-dimensional flower shapes in the waffle that is to be cooked in cooking assembly 200.

Central cup-like mold 208b is receivable on circular space 208a of upper plate 202 when cooking assembly 200 is in a closed position. Central cup-like mold 208b has a sloped wall 208e. Sloped wall 208e is sloped at an angle such that an imaginary line 206f running from a top edge 208c to a bottom edge 208d makes a small angle with an imaginary plane that is perpendicular to the horizontal plane of lower plate 204. The small angle is such that when a waffle is cooked in cavity 205, the cooked waffle can be easily detached from cavity 205 in order to preserve the general structural integrity of the cooked waffle. FIG. 2 also shows a bottom isometric view of a cooked waffle 210 with a bottom surface 210a and a top surface 210b.

FIG. 3 is a bottom isometric view of a cooked waffle 310. Cooked waffle 310 has a bottom surface 310a and a top surface 310b. Bottom isometric view 300 shows that waffle 310 includes a plurality of pyramid-shaped (pyramidal) wells, such as pyramid-shaped wells 310c. Pyramid-shaped wells 310c are separated by ridges, such as ridges 310g. The base of pyramid-shaped wells 310c have a smaller area that the area of the top opening of the well. Cooked waffle 310 further includes partial pyramidal wells 310d. Waffle 310 also includes grooves 310e. Grooves 310e radiate from a central circular surface 310h. Bottom surface 310a of waffle 310 is created due, in part, to the various protuberances and ridges of the upper plate of the cooking assembly as described herein with reference to FIG. 1 and FIG. 2. Cooked waffle 310 also includes a sloped wall 310f.

FIG. 4 is similar to FIG. 3 except that FIG. 4 is a line drawing (bottom isometric view) of cooked waffle 410. In FIG. 4, cooked waffle 410 has a bottom surface 410a and a top surface 410b. Bottom isometric view 400 shows that waffle 410 includes a plurality of pyramid-shaped (pyramidal) wells, such as pyramid-shaped wells 410c. Pyramid-shaped wells 410c are separated by ridges, such as ridges 410g. The base of pyramid-shaped wells 410c have a smaller area that the area of the top opening of the well. Cooked waffle 410 further includes partial pyramidal wells 410d. Waffle 410 also includes grooves 410e. Grooves 410e radiate from a central circular surface 410h. Bottom surface 410a of waffle 410 is created due, in part, to the various protuberances and ridges of the upper plate of the cooking assembly as described herein with reference to FIG. 1 and FIG. 2. Cooked waffle 410 also includes a sloped wall 410f.

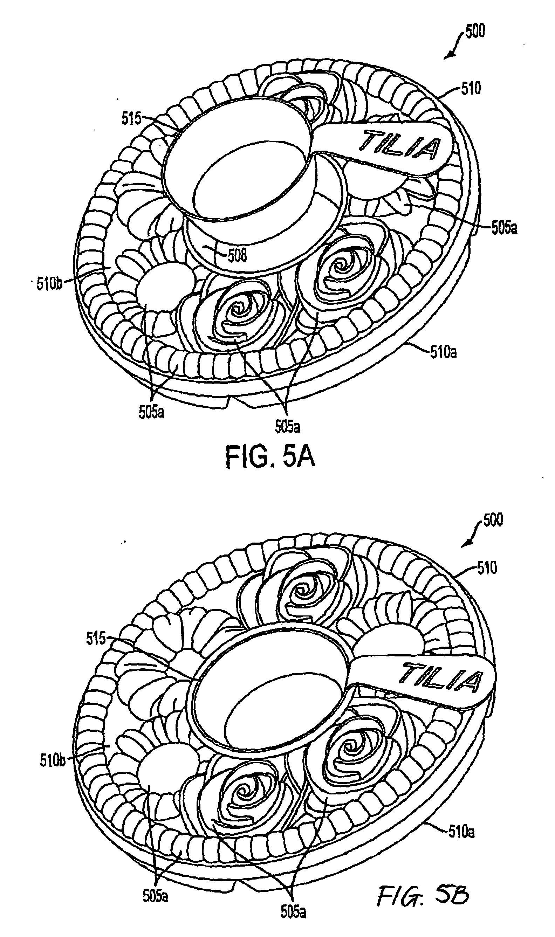

FIG. 5A is a top isometric view 500 of a cooked waffle that can accommodate a syrup holder. Top isometric view 500 shows cooked waffle 510 with a top surface 510b and a bottom surface 510a. Top surface 510b of cooked waffle 510 includes contoured surfaces 505a that form a ring of flowers in bas relief around central cup 508. Central cup 508 can accommodate a syrup holder, such as syrup cup 515 shown in FIG. 5A. The embodiment is not restricted to syrup holders. Central cup 508 can accommodate fruit cups, ice-cream cups, or cups filled with other food stuff. According to certain embodiments, syrup or other waffle-fillings can be poured directly into central cup 508. Top surface 510b of waffle 510 is created due, in part, to contoured surfaces 105a and central cup-like mold 108b of the lower plate of the cooking assembly as described herein with reference to FIG. 1.

FIG. 5B is similar to FIG. 5A except that FIG. 5B shows a syrup holder resting on the cooked waffle.

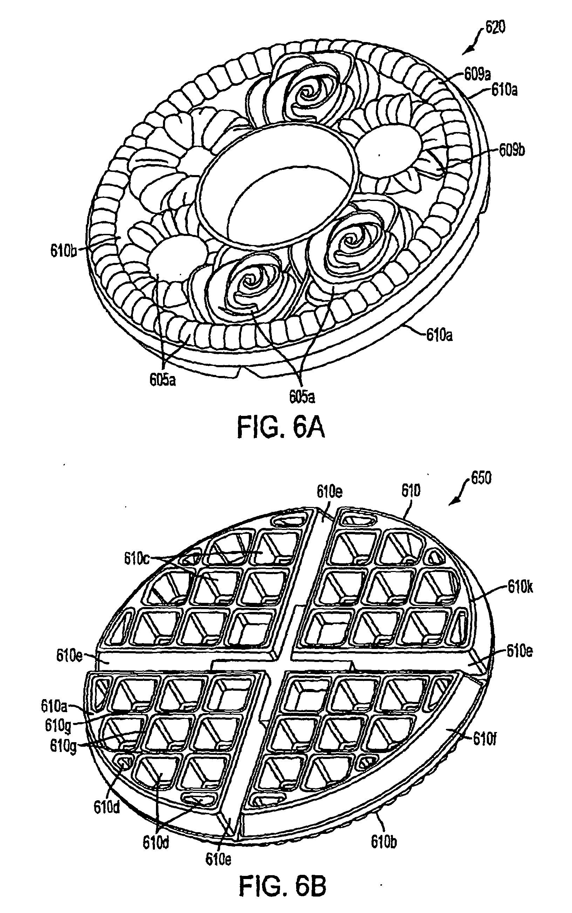

FIG. 6A is a top isometric view of a cooked waffle with a logo. Top isometric view 620 shows cooked waffle 610 with a top surface 610b and a bottom surface 610a. Top surface 610b of cooked waffle 610 includes contoured surfaces 605a that form a ring of flowers in bas relief around central circular disk 609a. Central circular disk 609a includes engraving 609b. Engraving 609b can be any logo, word, name or message. In certain embodiments, central circular disk 609a can include any logo, word, name or message in bas relief instead of an engraving.

Top surface 610b of waffle 610, as shown in FIG. 6A, can created due, in part, to contoured surfaces 105a and central cup-like mold 108b of the lower plate of the cooking assembly as described herein with reference to FIG. 1.

FIG. 6B is a bottom isometric view of a cooked waffle 610 of FIG. 6A. Cooked waffle 610 has a bottom surface 610a and a top surface 610b. Bottom isometric view 650 shows that waffle 610 includes a plurality of pyramid-shaped (pyramidal) wells, such as pyramid-shaped wells 610c. Pyramid-shaped wells 610c are separated by ridges, such as ridges 610g. The base of pyramid-shaped wells 610c have a smaller area that the area of the top opening of the well. Cooked waffle 610 further includes partial pyramidal wells 610d. Waffle 610 also includes grooves 610e. Grooves 610e intersect at a central region 610k. Cooked waffle 610 also includes a sloped wall 610f.

In view of the waffles 610 as shown in FIG. 6A and 6B, the central cup-like mold 108b of the cooking assembly of FIG. 1 can be detachable, according to certain embodiments. Thus, according to certain embodiments, central cup-like mold 108b of the cooking assembly of FIG. 1 can be detached and replaced with other central molds, such as molds to engrave words, logos, names or messages onto the waffle. Further, molds for creating words, names or messages in bas relief on the waffle can be used. Such molds can be screwed onto to lower the lower plate of the cooking assembly. In certain embodiments, the central molds are fixed to the lower plate of the cooking assembly.

To make waffle with a syrup holder or logo, the cavity of the lower plate of the cooking assembly is filled with a suitable waffle batter. The cooking assembly is then closed by overlying and aligning the upper plate over the lower plate. The cooking assembly includes suitable heating and cooking mechanisms for cooking the waffles. According to certain embodiments, the cooking assembly automatically shuts off its cooking mechanism when the waffles are completely cooked.

## Claims

1. A method for making a cooking assembly for cooking a waffle, the method comprising:
forming a first plate with a first cavity;
forming a second plate that includes a second cavity, wherein said second cavity comprises a plurality of protuberances that are separated by a plurality of grooves;
forming in said first cavity:
a center cup-like mold for molding a syrup-holder in said waffle;
and
a plurality of contoured surfaces for molding a ring of three-dimensional flowers in said waffle around said syrup-holder.

2. The method of Claim 1, further comprising sizing and shaping said plurality of protuberances suitable for allowing even cooking of said waffle.

3. The method of Claim 1, further comprising shaping said first cavity to include a plurality of flower-shaped perimeters in said first cavity.

4. The method of Claim 1, further comprising adapting said second plate to be receivable by said first plate when said cooking assembly is in a closed position.

5. The method of Claim 1, wherein said second cavity is substantially aligned with said first cavity when said second plate is positioned over said first plate in a closed position.

6. The method of Claim 1, wherein said plurality of protuberances are approximately pyramidal in shape.

7. The method of Claim 1, further comprising adapting a top perimeter of said second cavity is greater than a bottom perimeter of said second cavity.

8. A cooking assembly for making waffles, the cooking assembly comprising:
a means for cooking a first portion of a waffle that includes a syrup holder and a ring of three-dimensional shaped flowers;
a means for cooking a second portion of said waffle; and
wherein said means for cooking said first portion includes means for defining said syrup holder and said ring of three-dimensional shaped flowers in said waffle.

9. The cooking assembly of Claim 8, further comprising means for allowing said means for cooking said first portion to be receivable by said means for cooking said second portion when said cooking assembly is in a closed position.

10. The cooking assembly of Claim 8, wherein said means for cooking said first portion is substantially aligned with said means for cooking said second portion when said means for cooking said second portion is positioned over said means for cooking said first portion in a closed position.

11. The cooking assembly of Claim 8, further comprising means for forming a plurality of pyramidal wells on a surface of said second portion of said waffle.

12. The cooking assembly of Claim 8, wherein said means for cooking said second portion has a top perimeter that is greater than a bottom perimeter of said means for cooking said second portion.

13. A cooking assembly for making waffles, the cooking assembly comprising:
a first plate with a first cavity;
a second plate that includes a second cavity, wherein said second cavity comprises a plurality of protuberances that are separated by a plurality of grooves, wherein said plurality of protuberances are sized and shaped for allowing even cooking of said waffle; and
a center cup-like mold for molding a syrup-holder in said waffle and a plurality of contoured surfaces for molding a ring of flowers around said syrup-holder in said first cavity.

14. The cooking assembly of Claim 13, wherein said first cavity includes a plurality of flower-shaped perimeters.

15. The cooking assembly of Claim 13, wherein said second plate is receivable by said first plate when said cooking assembly is in a closed position.

16. The cooking assembly of Claim 13, wherein said second cavity is substantially aligned with said first cavity when said second plate is positioned over said first plate in a closed position.

17. The cooking assembly of Claim 13, wherein said plurality of protuberances are approximately pyramidal in shape.

18. The cooking assembly of Claim 13, wherein a top perimeter of said second cavity is greater than a bottom perimeter of said second cavity.

19. A method for making a cooking assembly for cooking a waffle, the method comprising:
forming a first plate with a first cavity;
forming a second plate that includes a second cavity, wherein said second cavity comprises a plurality of protuberances that are separated by a plurality of grooves; and
forming in said first cavity:
a center disk-like mold with an engraving on said disk-like mold for molding said engraving onto said waffle; and
a plurality of contoured surfaces for molding a ring of flowers around said logo in said waffle.

20. The method of Claim 19, further comprising sizing and shaping said plurality of protuberances suitable for allowing even cooking of said waffle.

21. The method of Claim 19, further comprising shaping said first cavity to include a plurality of flower-shaped perimeters in said first cavity.

22. The method of Claim 19, further comprising adapting said second plate to be receivable by said first plate when said cooking assembly is in a closed position.

23. The method of Claim 19, wherein said second cavity is substantially aligned with said first cavity when said second plate is positioned over said first plate in a closed position.

24. The method of Claim 19, wherein said plurality of protuberances are approximately pyramidal in shape.

25. The method of Claim 19, further comprising adapting a top perimeter of said second cavity is greater than a bottom perimeter of said second cavity.
